# EUROPEAN PATENT APPLICATION

(11) **EP 0 738 525 A2**
(43) Date of publication of application: **23.10.1996**
(21) Application number: 96830219.0
(22) Date of filing: 18.04.1996
(51) Int. Cl.: A63B 49/08, B25G 1/01, B62K 21/26

(54) **Strip element for covering handgrips of sports articles, tools and the like**

(30) Priority: 18.04.1995 IT MI950275 U
(71) Applicant: NUOVA DUEGI S.r.l., 31010 Casella d'Asolo (Treviso) (IT)
(72) Inventor: Prompicai, Giovanni, c/o NUOVA DUEGI S.r.l., 31010 Casella d'Asolo (Treviso) (IT)
(74) Representative: Cicogna, Franco

(57) **Abstract**

The present invention relates to a strip element for covering handgrips of sports articles and the like, characterized in that the strip element comprises a supporting strip provided, at a middle portion thereof, with a recess for housing therein a viscoelastic material inner construction.

## Description

### BACKGROUND OF THE INVENTION

The present invention relates to a strip element for covering handgrips of sports articles, tools, and the like.

As is known, on handgrips of sports articles, such as tennis, rackets, handlebars, steering wheels, are conventionally used strips allowing the user to obtain a firm gripping of the handgrip while providing a more comfortable gripping.

At present are commercially available strips which are provided, at a bottom central region thereof, with a hot melt adhesive layer, operating for firmly connecting the strip, but which does not allow to obtain a proper absorption of the impacts and vibrations.

Another prior gripping strip comprises a strip element coupled to a polyurethane foam material and an impact absorbing material, conventionally made of foamed polyurethane; however, such a solution has not been found as appropriate, in particular from the vibration absorption standpoint.

### SUMMARY OF THE INVENTION

Accordingly, the aim of the present invention is to overcome the above mentioned problem, by providing a strip element for covering or coating handgrips of sports articles, tools and the like, which provides an improved gripping comfort, while reducing the impacts deriving from pressure surges.

Within the scope of the above mentioned aim, a main object of the present invention is to provide such a strip element which allows to greatly improve the scattering of the vibrations which would be very dangerous for the muscles of the user.

Another object of the present invention is to provide such a strip element which is very reliable and safe in operation and which, moreover, can be made in a very simple manner at a very reduced cost.

According to one aspect of the present invention, the above mentioned aim and objects, as well as yet other objects, which will become more apparent hereinafter, are achieved by a strip element for covering handgrips of sports articles, tools and the like, characterized in that said strip element comprises a supporting strip provided, at a middle region thereof, with a recess for housing therein a viscoelastic material inner construction.

### BRIEF DESCRIPTION OF THE DRAWING

Further characteristics and advantages of the invention will become more apparent hereinafter from the following detailed description of a preferred embodiment of a strip element for covering handgrips of sports articles, tools and the like, which is illustrated, by way of an indicative, but not limitative, example, in the figures of the accompanying drawings, where:

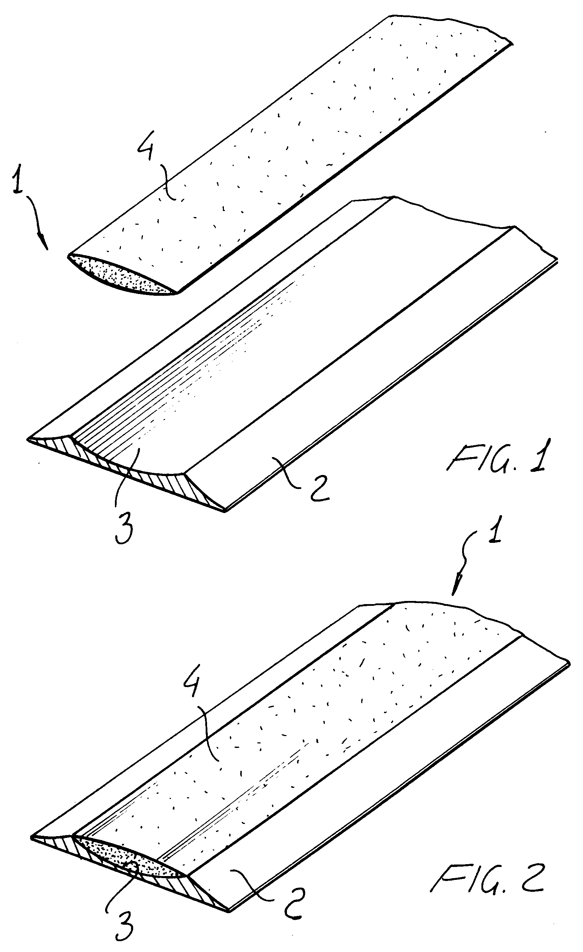

Figure 1 is an exploded perspective view illustrating the strip element according to the present invention, with the inner structure thereof separated from the supporting strip;
Figure 2 is a schematic view illustrating the strip element according to the invention in an assembled condition;
Figure 3 is a further schematic view illustrating a mold for making the inner parts or structure of the subject strip element;
Figure 4 is a cross-sectional view illustrating the mold shown in Figure 3, during the connection with the supporting strip;
Figure 5 is a perspective view illustrating a book-type of mold, for applying the inner structure directly on the supporting strip or side;
   and
Figure 6 is a further cross-sectional view, substantially taken along the section line VI-VI of Figure 5 and illustrating the mold shown in Figure 5.

### DESCRIPTION OF THE PREFERRED EMBODIMENT

With reference to the number references of the above mentioned figures, the strip element for covering handgrips of sports articles, tools and the like, according to the invention, which has been generally indicated by the reference number 1, comprises a supporting strip 2, which is preferably made of a spreaded coagulated polyurethane or polyvinylchloride, or leather or any other suitable materials.

The supporting strip 2 is provided, at a middle portion thereof, with a recess 3 in which is engaged an inner construction 4, made of a viscoelastic material such as a gel or the like.

For making the gripping strip, the supporting strip 2 is pre-cut and milled so as to provide the recess 3 for engaging therein the inner construction 4.

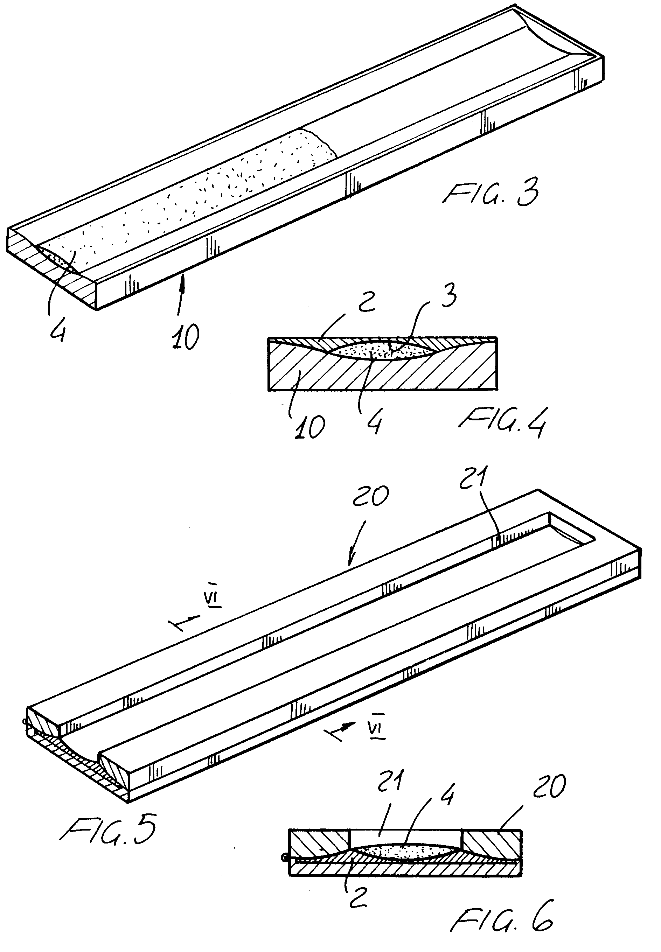

The inner construction can be assembled, as shown in Figures 3 and 4, by using a mold 10 in which is cast the gel material for forming the inner construction or structure; upon polymerizing, on the mold 10 is arranged the pre-milled supporting strip, supplied by suitable supplying lines, so as to perform the coupling operation.

As shown in Figure 5, this coupling operation can be performed by providing a book-type of mold 20, provided for engaging therein the supporting strip in which is formed the mentioned recess and, through a suitable slot 21 provided through the top portion of the mold 20, the viscoelastic material being cast directly on the supporting strip, so as to provide the desired connection.

The thus obtained strip element will provide very good comfort and impact absorption features.

In particular, this strip element will be provided with great vibration absorbing characteristics.

The provided strip element can be used in several fields such as, for example, for covering the handle grips of tennis rackets, golf clubs or ski rods, or bicycle handlebars and motorcycle handlebars, steering wheels, suitcase handles and industrial tool handles, as well as anti-vibration handles in general.

In practicing the invention, the used materials, as well as the contingent size and shapes, can be any, depending on requirements.

## Claims

1. A strip element for covering handgrips of sports articles, tools and the like, characterized in that said strip element comprises a supporting strip provided, at a middle region thereof, with a recess for housing therein a viscoelastic material inner construction.

2. A strip element, according to Claim 1, wherein said supporting strip is made of a spreaded polyurethane material, PVC, leather or the like.

3. A strip element, according to Claim 1, wherein said recess is made by milling.

4. A strip element, according to Claim 1, wherein said viscoelastic material forming said inner construction is of a gel type.

5. A strip element, according to Claim 1, wherein said inner construction is made by casting a material in a mold and applying, upon polymerizing, the support strip on said polymerized material.

6. A strip element, according to Claim 1, wherein said strip element is made by arranging the supporting strip in a mold, inside which is cast the viscoelastic material directly introduced into said recess.
